# EUROPEAN PATENT APPLICATION

(11) **EP 4 390 746 A1**
(43) Date of publication of application: **26.06.2024**
(21) Application number: 23217767.5
(22) Date of filing: 18.12.2023
(51) Int. Cl.: G06F 21/74, G01R 31/317, G06F 21/75, G06F 21/78

(54) **INTEGRATED CIRCUIT, APPLICATION PROCESSOR, AND DATA PROCESSING METHOD**

(30) Priority: 19.12.2022 KR 20220178695
(71) Applicant: Samsung Electronics Co., Ltd., Suwon-si, Gyeonggi-do 16677 (KR)
(72) Inventor: WOO, Hyungil, 16677 Suwon-si (KR); CHANG, Joonyoung, 16677 Suwon-si (KR)
(74) Representative: Marks & Clerk LLP

(57) **Abstract**

Disclosed is an integrated circuit including intellectual property (IP) pieces including test logics, respectively, a scanner configured to collect debugging data from the test logics of the IP pieces, and an encryption circuit configured to convert the debugging data into an encrypted data form.

## Description

### TECHNICAL FIELD

The disclosure relates to integrated circuits, application processors, and/or data processing methods. More particularly, the disclosure relates to integrated circuits and/or application processors capable of collecting debugging data, and encrypting and storing the collected debugging data.

### BACKGROUND

Owing to high integration of a semiconductor chip, a lot of time and resources are required to test the semiconductor chip. To maintain the quality of a semiconductor chip and improve test efficiency, design for testability (DFT) techniques are widely used, and a scan test technique occupies a significant weight in the DFT techniques. By using the scan test technique, errors generated in hardware and/or software of a system on chip (SoC) may be debugged by a scan dump scheme.

The scan dump scheme may perform debugging by extracting values of all flip-flops connected by a scan chain through DFT. However, debugging data using the scan dump scheme may be defenselessly exposed to a malicious user's access or data use.

### SUMMARY

The disclosure provides integrated circuits including circuits capable of encrypting scan data.

According to an aspect of the disclosure, there is provided an integrated circuit.

The integrated circuit comprises intellectual property (IP) pieces including test logics, respectively, a scanner configured to collect debugging data from the test logics of the IP pieces, and an encryption circuit configured to convert the debugging data into encrypted data.

According to another aspect of the disclosure, there is provided an application processor.

The application processor comprises a plurality of function blocks each including a test logic, a controller configured to output a scan mode signal and a scan control signal indicating a debugging data collection operation mode when a fault occurs in operations of at least one or more (e.g., some) of the plurality of function blocks, a built-in scanner configured to collect debugging data from test logics included in the at least one or more (e.g., some) of the plurality of function blocks based on the scan mode signal and the scan control signal and transmit the collected debugging data to a memory, and an encryption circuit configured to convert the collected debugging data into encrypted data.

According to another aspect of the disclosure, there is provided a data processing method.

The data processing method may include generating, by a controller, a scan mode signal in response to a scan request signal, providing, by the controller, scan information to a built-in scanner, collecting, by the built-in scanner, scan data from a target IP piece based on the scan information, performing security processing on the collected scan data to generate a secure data, and transmitting the secure data to a memory.

According to another aspect of the disclosure, there is provided an application processor mounted in an electronic device comprising a memory, the application processor comprising: the described integrated circuit, wherein the scanner is a built-in scanner configured to collect debugging data from the test logics of the IP pieces based on the scan mode signal and the scan control signal and transmit the collected debugging data to the memory; and a controller configured to output a scan mode signal and a scan control signal indicating a debugging data collection operation mode when a fault occurs in operations of at least one of the IP pieces.

The encryption circuit may comprises a first processing circuit configured to obfuscate the collected debugging data; and/or a second processing circuit configured to rearrange an address of the collected debugging data.

The first processing circuit and the second processing circuit may be connected to an output end of the built-in scanner.

The first processing circuit may be connected to an input end of the built-in scanner, and/or the second processing circuit may be connected to an output end of the built-in scanner.

The first processing circuit may be inside each of the plurality of function blocks, and/or the second processing circuit may be connected to an output end of the built-in scanner.

The second processing circuit may be connected to the output end of the built-in scanner, and the first processing circuit is connected to an output end of the second processing circuit.

At least some of the above and other features of the disclosure are set out in the claims.

### BRIEF DESCRIPTION OF THE DRAWINGS

Example embodiments of the disclosure will be more clearly understood from the following detailed description taken in conjunction with the accompanying drawings in which:
FIG. 1 is a block diagram illustrating an electronic system according to an example embodiment;
FIG. 2 is a signaling diagram illustrating an operation of an integrated circuit, according to an example embodiment;
FIG. 3 is a block diagram illustrating a first processing circuit according to an example embodiment;
FIG. 4 is a block diagram illustrating a second processing circuit according to an example embodiment;
FIG. 5 is a block diagram illustrating an electronic system according to an example embodiment;
FIG. 6 is a block diagram illustrating an electronic system according to an example embodiment;
FIG. 7 is a block diagram illustrating an electronic system according to an example embodiment;
FIG. 8 is a flowchart illustrating a data processing method of an integrated circuit, according to an example embodiment;
FIG. 9 is a flowchart illustrating a data processing method using a first processing circuit, according to an example embodiment;
FIG. 10 is a flowchart illustrating a data processing method using a second processing circuit, according to an example embodiment;
FIG. 11 is a block diagram schematically illustrating an electronic device according to an example embodiment; and
FIG. 12 is a block diagram schematically illustrating an application processor and an electronic device including the same, according to an example embodiment.

### DETAILED DESCRIPTION

Hereinafter, various example embodiments are described with reference to the accompanying drawings.

As used herein, expressions such as "at least one of," when preceding a list of elements, modify the entire list of elements and do not modify the individual elements of the list. Thus, for example, both "at least one of A, B, or C" and "at least one of A, B, and C" mean either A, B, C or any combination thereof. Likewise, A and/or B means A, B, or A and B.

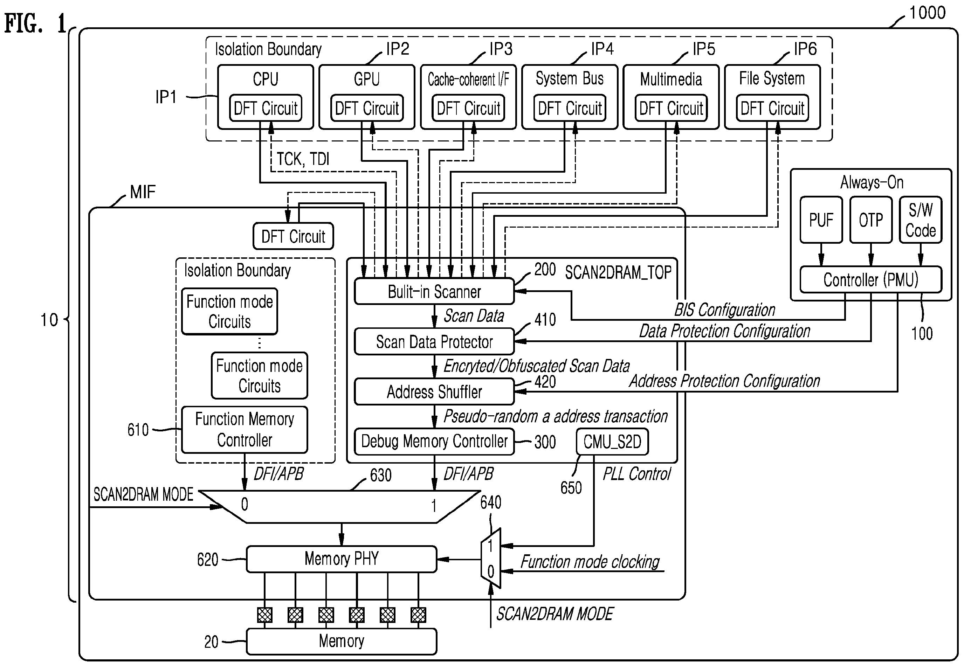

FIG. 1 is a block diagram illustrating an electronic system 1000 according to an example embodiment.

The electronic system 1000 may be mounted in an electronic device, such as a laptop computer, a smartphone, a tablet personal computer (PC), a personal digital assistant (PDA), an enterprise digital assistant (EDA), a digital camera, a portable multimedia player (PMP), a portable navigation device (PND), a handheld game console, a mobile internet device (MID), a multimedia device, a wearable computer, an Internet of Things (IoT) device, an Internet of Everything (IoE) device, or an e-book.

Referring to FIG. 1, the electronic system 1000 may include an integrated circuit 10 and a memory 20. The electronic system 1000 may further include various types of components, such as a camera module, a display module, and/or a communication module.

In the electronic system 1000 according to the present example embodiment, if a fault occurs in an operation of the electronic system 1000, or if a fault occurs in operations of at least some of intellectual property (IP) pieces (e.g., first to sixth IP pieces IP1 to IP6) and a memory interface MIF included in the integrated circuit 10, a built-in scanner 200 included in the integrated circuit 10 may collect debugging data from all or some of the first to sixth IP pieces IP1 to IP6 and the memory interface MIF, and a debug memory controller (e.g., a second memory controller) 300 may store encrypted data of the debugging data in the memory 20. The debugging data may be used for a debugging operation of detecting an error occurrence region and correcting an error. In an example embodiment, the debugging data may be a state value of registers included in first to sixth IP pieces IP1 to IP6 and the memory interface MIF. In an example embodiment, the debugging data may be scan data (Scan Data) output from a scan chain formed by the registers together with test logics (design for testability (DFT) circuits). In other words, the debugging data may be a snap shot of a target IP piece. However, the debugging data is not limited thereto and may be various types of data indicating operating states of the first to sixth IP pieces IP1 to IP6 and the memory interface MIF. Hereinafter, for convenience of description, the scan data (Scan Data) is described as an example of the debugging data.

The integrated circuit 10 may control an operation of the electronic system 1000. According to some example embodiments, the integrated circuit 10 may indicate a system on chip (SoC), an application processor (AP), a mobile AP, or a control chip.

The integrated circuit 10 may include the first to sixth IP pieces IP1 to IP6, the memory interface MIF, and a controller 100, and the memory interface MIF may include a first memory controller (or function memory controller) 610, the built-in scanner 200, the second memory controller (or debug memory controller) 300, a first processing circuit (or scan data protector) 410, and a second processing circuit (or address shuffler) 420. Although FIG. 1 shows that the built-in scanner 200, the second memory controller 300, the first processing circuit 410, and the second processing circuit 420 are included in the memory interface MIF, example embodiments are not limited thereto, and the built-in scanner 200, the second memory controller 300, the first processing circuit 410, and the second processing circuit 420 may be separately provided from the memory interface MIF.

A piece of IP is a function block integrated in the integrated circuit 10 and may comprise a central processing unit (CPU), a graphics processing unit (GPU), a processor, a microprocessor, each core of a multi-core processor, a power management unit (PMU), a clock management unit (CMU), a cache-coherent interface, a system bus, a memory, multimedia, a file system, a universal serial bus (USB), a peripheral component interconnect (PCI) interface, a digital signal processor (DSP), a wired interface, a wireless interface, a controller, embedded software, a codec, a video module (e.g., a camera interface, a Joint Photographic Experts Group (JPEG) processor, a video processor, or a mixer), a 3-dimentional (3D) graphics core, an audio system, a driver, or the like.

For example, as shown in FIG. 1, the first to sixth IP pieces IP1 to IP6 may include a CPU, a GPU, a cache-coherent interface, a system bus, multimedia, and a file system. The memory interface MIF may also be an IP piece like one of the first to sixth IP pieces IP1 to IP6. However, example embodiments are not limited thereto, and the number of pieces and types of IP may be variously modified.

Each of the first to sixth IP pieces IP1 to IP6 may include a test logic (a DFT circuit). The DFT circuit may output data indicating an operating state of a corresponding IP in a scan mode for collecting scan data (Scan Data) or a test mode for testing an operation of the integrated circuit 10. Herein, the scan mode may be an operation mode in which the integrated circuit 10 collects scan data (Scan Data) independently without intervention by an external device, and the test mode may be an operation mode in which an external device provides a test input signal to the integrated circuit 10 and tests an operating state of the integrated circuit 10 based on the test input signal.

In an example embodiment, a register may include flip-flops, and the DFT circuit may be connected to the flip-flops to form a scan chain. The DFT circuit may output scan data (Scan Data) indicating a state value of registers. According to an example embodiment, the scan data (Scan Data) may include information from which circuit information is inferred.

The controller 100 may control a general operation performed to collect and store scan data (Scan Data) and reboot the electronic system 1000 when a fault occurs in an operation of the electronic system 1000, or when a fault occurs in operations of at least some of the first to sixth IP pieces IP1 to IP6 and the memory interface MIF.

According to an example embodiment, the controller 100 may be controlled by an external input, such as software code, a one-time password (OTP), or a physical unclonable function (PUF).

The controller 100 may be implemented by program code instructing performance of the control operations described above and a microcontroller or another processor (a CPU) configured to execute the program code. The program code may be stored in the memory 20 or an embedded memory of the integrated circuit 10. For example, if a fault occurs in an operation of the electronic system 1000 or if a fault occurs in operations of at least some of the first to sixth IP pieces IP1 to IP6 and the memory interface MIF, the microcontroller may perform the operations described above by loading and executing the program code. However, the controller 100 is not limited thereto and may be implemented by hardware, software, firmware, or a combination thereof. In an example embodiment, the controller 100 may be implemented by separate hardware different from the first to sixth IP pieces IP1 to IP6 and the memory interface MIF.

The controller 100 may switch the electronic system 1000 to the scan mode. The controller 100 may generate a scan mode signal indicating the scan mode based on a fault detection signal provided from outside of the integrated circuit 10. The controller 100 may provide the scan mode signal to the first to sixth IP pieces IP1 to IP6 and the memory interface MIF. The controller 100 may provide other control signals. In response to the scan mode signal, the integrated circuit 10 may switch to the scan mode.

When the integrated circuit 10 operates in the scan mode, the controller 100 may determine at least some IP pieces (hereinafter, referred to as target IP pieces), from which scan data (Scan Data) is to be collected, among the first to sixth IP pieces IP1 to IP6 and the memory interface MIF and provide, to the target IP pieces, a control signal to stop running. In an example embodiment, the controller 100 may determine all of the first to sixth IP pieces IP1 to IP6 and the memory interface MIF as the target IP pieces.

In addition, the controller 100 may functionally isolate the target IP pieces from the other IP pieces. Even though any operation is performed in the isolated IP pieces (or circuits), a result of the operation does not affect the other IP pieces or circuits. In an example embodiment, IP pieces (or circuits) having a functionally close relationship may form one function block, and this function block may be functionally isolated (e.g., referred to as boundary isolation) from the other IP pieces or circuits. As shown in FIG. 1, all of the first to sixth IP pieces IP1 to IP6 may be isolated.

The controller 100 may control the built-in scanner 200 in the memory interface MIF to collect scan data (Scan Data), control the first processing circuit 410 and the second processing circuit 420 to perform data encryption processing, and perform a control to store encrypted data in the memory 20. To this end, the controller 100 may provide scan information (BIS Configuration) to the built-in scanner 200, provide data protection information (Data Protection Configuration) to the first processing circuit 410, provide address protection information (Address Protection Configuration) to the second processing circuit 420, and provide memory configuration information (not shown) to the second memory controller 300.

In addition, the controller 100 may control the electronic system 1000 to be rebooted or reset so that the electronic system 1000 normally operates, after the encrypted data is stored in the memory 20.

The memory interface MIF may transmit data to the memory 20 or receive read data from the memory 20. The memory interface MIF may communicate with the other IP pieces via a system bus (e.g., the fourth IP piece IP4).

The memory interface MIF may include the first memory controller 610, the built-in scanner 200, the first processing circuit 410, the second processing circuit 420, the second memory controller 300, the DFT circuit, a memory physical layer 620, a first selector 630, a second selector 640, and a CMU 650. In addition, the memory interface MIF may further include a plurality of function mode circuits.

The first memory controller 610 may receive or transmit data from or to the memory 20. When the integrated circuit 10 operates in a normal mode, the first memory controller 610 may receive data from other IP pieces via the system bus or transmit read data received from the memory 20 to other IP pieces via the system bus. During a data transmission and reception operation, a plurality of function mode circuits may operate.

The built-in scanner 200, the first processing circuit 410, the second processing circuit 420, and the second memory controller 300 may be implemented by one module (SCAN2DRAM_TOP) and enabled in response to a scan mode signal provided from the controller 100. When the integrated circuit 10 operates in the scan mode, the built-in scanner 200 may collect scan data (Scan Data) from the DFT circuit included in at least one of the first to sixth IP pieces IP1 to IP6 and the memory interface MIF. The built-in scanner 200 may collect scan data (Scan Data) from at least some or all of the first to sixth IP pieces IP1 to IP6 and the memory interface MIF based on the scan information BIS Configuration provided from the controller 100. The built-in scanner 200 may be referred to as a scanner.

The built-in scanner 200 may be point-to-point connected to each of the test logics (DFT circuits) in the first to sixth IP pieces IP1 to IP6 and the memory interface MIF. The built-in scanner 200 may receive scan data (Scan Data) through the point-to-point connection. The built-in scanner 200 may provide a scan input signal TCK to a DFT circuit and receive scan output data TDI output from the DFT circuit in response to the scan input signal TCK. For example, the scan input signal TCK may include a scan clock signal, scan input data, and a scan enable signal. The built-in scanner 200 may provide scan output data TDI, received from the DFT circuit included in at least one of the first to sixth IP pieces IP1 to IP6 and the memory interface MIF, to the first processing circuit 410 as scan data (Scan Data).

In the present example embodiment, the built-in scanner 200 may transmit collected scan data (Scan Data) to the first processing circuit 410 without using IP pieces operating in the normal mode. In other words, the built-in scanner 200 may transmit the scan data (Scan Data) to the first processing circuit 410 without passing through other IP pieces (e.g., a bus or the first memory controller 610. The built-in scanner 200 may transmit the scan data (Scan Data) directly to the first processing circuit 410.

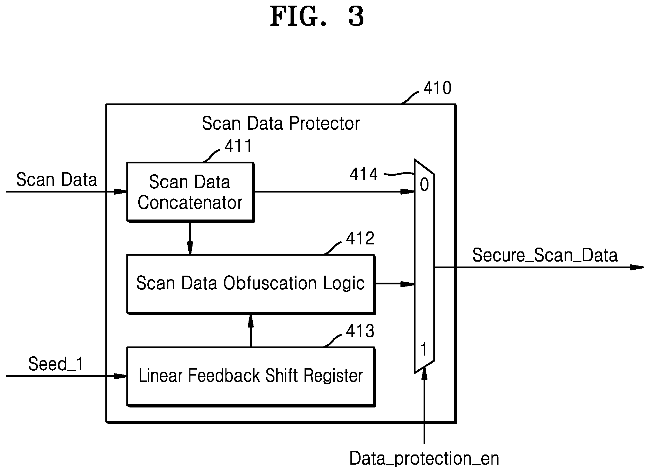

According to an example embodiment, the first processing circuit 410 may obfuscate the scan data (Scan Data) by using, for example, a linear feedback shift register (LFSR) and the like and transmit the obfuscated data to the second processing circuit 420. A particular description of the first processing circuit 410 is made below with reference to FIG. 3.

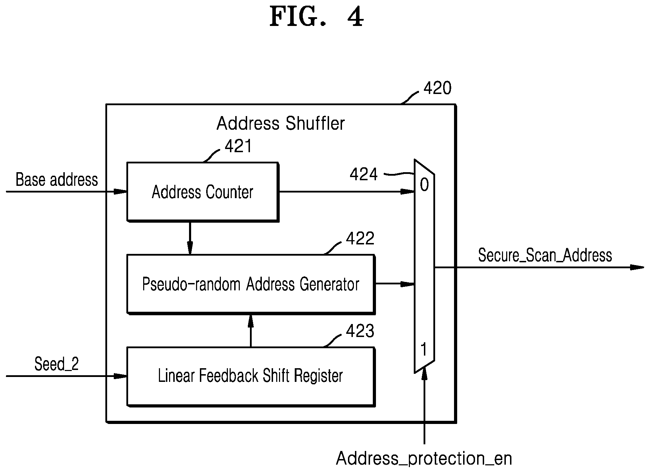

According to an example embodiment, the second processing circuit 420 may apply a dynamic random access memory (DRAM) address allocation scheme as a pseudo-random scheme to the obfuscated data received from the first processing circuit 410. By doing this, the second processing circuit 420 may generate address-rearranged obfuscated data. The second processing circuit 420 may transmit the address-rearranged obfuscated data to the second memory controller 300. A particular description of the second processing circuit 420 is made below with reference to FIG. 4.

According to an example embodiment, the first processing circuit 410 and the second processing circuit 420 may be referred to as an encryption circuit or an encryption unit. According to some example embodiments of the disclosure, the encryption circuit may be included to add a security function capable of protecting hardware and software, thereby blocking or preventing malicious access to and use of scan data.

The encryption circuit according to the present example embodiment may obfuscate scan data (Scan Data) and pseudo-randomly generate an address by using a seed assigned by a user, so that the scan data (Scan Data) is restored and analyzed only with an internal circuit structure and seed information configured by secure software. According to the present example embodiment, remapping to a scan chain may not be performed without both an internal circuit structure of a space in which scan data (Scan Data) is to be stored and a software configuration value. Data restoration may be impossible without all data obfuscation schemes in a first processing circuit with respect to restored scan data (Scan Data) and all options selectable by software with respect to the data obfuscation schemes.

According to the present example embodiment, scan data (Scan Data) may be obfuscated to block or prevent scan data analysis of an unauthorized user, thereby protecting key circuit information and securing software information in an integrated circuit.

The memory interface MIF may include the second memory controller 300 operating in the scan mode. In the scan mode, the second memory controller 300 may transmit scan data (Scan Data) received from the first processing circuit 410 or the second processing circuit 420 to the memory 20.

For example, if the first to sixth IP pieces IP1 to IP6 include the first memory controller 610 or the system bus (e.g., the fourth IP piece IP4) and all of the first to sixth IP pieces IP1 to IP6 are target IP pieces, in the scan mode, the first memory controller 610 or the system bus may stop running. The built-in scanner 200 may transmit encrypted scan data to the memory 20 through the second memory controller 300 exclusively set for the scan mode, and thus, the encrypted scan data of which the stability is ensured may be stored in the memory 20.

The first selector 630 may select one of the first memory controller 610 and the second memory controller 300 in response to a scan mode select signal SCAN2DRAM MODE and connect the selected memory controller to the memory physical layer 620. For example, the first selector 630 may select the second memory controller 300 if an output of the second memory controller 300 is 1, and select the first memory controller 610 if an output of the first memory controller 610 is 0. Therefore, the first memory controller 610 may have a control right on the memory physical layer 620 and the memory 20 in the normal mode, and the second memory controller 300 may have a control right on the memory physical layer 620 and the memory 20 in the scan mode.

The second selector 640 may select one of a clock signal Function mode clocking in a function mode circuit and a clock signal (PLL Control) in the scan mode in response to the scan mode select signal SCAN2DRAM MODE and connect the selected clock signal to the memory physical layer 620. The clock signal (PLL Control) in the scan mode may be a signal output from the CMU 650. For example, the second selector 640 may select the clock signal (Function mode clocking) in the function mode circuit if an output of the clock signal (Function mode clocking) in the function mode circuit is 0, and select the clock signal (PLL Control) in the scan mode if an output of the clock signal (PLL Control) in the scan mode is 1.

A selected one of the first memory controller 610 and the second memory controller 300 may set up the memory physical layer 620 and the memory 20. For example, the selected memory controller may reset (e.g., software reset) the memory 20, set a timing parameter, a memory configuration, and the like, and perform zero quality (ZQ) calibration. In addition, the selected memory controller may set a timing parameter of the memory physical layer 620 and adjust a lock state, synchronization, and the like. Memory physical layer 620 and memory 20 setup of a memory controller would be obvious to those of ordinary skill in the art, and thus, a detailed description thereof is omitted herein.

In the normal mode, the memory physical layer 620 is set up by the first memory controller 610 and may transmit user data received from the first memory controller 610 to the memory 20 or provide read data received from the memory 20 to the first memory controller 610. In the scan mode, the memory physical layer 620 is set up by the second memory controller 300 and may transmit encrypted data received from the second memory controller 300 to the memory 20.

In the scan mode, the built-in scanner 200 may collect scan data (Scan Data) based on the scan information (BIS Configuration), and the second memory controller 300 may set up the memory 20 and the memory physical layer 620 based on the memory configuration information.

The built-in scanner 200 may collect scan data (Scan Data) from IP pieces after the second memory controller 300 completely sets up the memory 20 and the memory physical layer 620.

In the scan mode, the first memory controller 610 and the plurality of function mode circuits may also correspond to target IP pieces. The first memory controller 610 and the plurality of function mode circuits may be boundary-isolated not to affect an operation of the built-in scanner 200. The built-in scanner 200 may receive scan data (Scan Data) for the first memory controller 610 and the plurality of function mode circuits from a DFT circuit.

The memory 20 may be provided as a storage medium of the electronic system 1000. In addition, the memory 20 may store encrypted data of scan data (Scan Data) provided from the built-in scanner 200. The memory 20 may be outside the integrated circuit 10. The memory 20 may store application programs, an operating system (OS) image, and various kinds of data. The memory 20 may include a memory card, such as a multimedia card (MMC), an embedded MMC (eMMC), a secure digital (SD) card, a microSD card, or a universal flash storage (UFS). In addition, the memory 20 may include a volatile memory, such as DRAM or static random access memory (SRAM), or a nonvolatile memory, such as flash memory, phase change RAM (PRAM), magnetic RAM (MRAM), resistive RAM (ReRAM), or ferroelectric RAM (FRAM). Although it is shown in the present example embodiment that the memory 20 is outside the integrated circuit 10, example embodiments are not limited thereto. In some example embodiment, the memory 20 may be an embedded memory included in the integrated circuit 10.

As described above, in the electronic system 1000 according to an example embodiment, if a fault occurs in an operation of the electronic system 1000 or a fault occurs in operations of at least some of the first to sixth IP pieces IP1 to IP6 included in the integrated circuit 10, the built-in scanner 200 may collect scan data (Scan Data) and store encrypted data of the scan data (Scan Data) in the memory 20 without intervention by an external device.

In addition, in the electronic system 1000 according to an example embodiment, because the second memory controller 300 stores encrypted data of scan data (Scan Data) in the memory 20 in the scan mode, in a process in which the built-in scanner 200 collects and stores scan data (Scan Data), the system bus (e.g., the fourth IP piece IP4) and the first memory controller 610 are not used. Therefore, even though an operation fault of the integrated circuit 10 occurs in the first memory controller 610 or the system bus, encrypted data of scan data (Scan Data) may be normally stored in the memory 20.

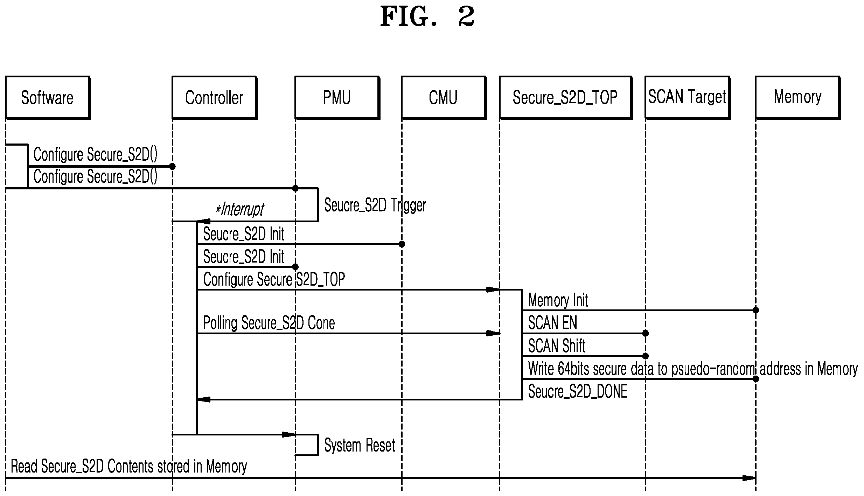

FIG. 2 is a signaling diagram illustrating an operation of an integrated circuit, according to an example embodiment.

Particularly, FIG. 2 is a signaling diagram illustrating a scan mode operation of the integrated circuit, according to an example embodiment. More particularly, FIG. 2 illustrates an operation of the integrated circuit 10 of FIG. 1 in the scan mode. In FIG. 2, a scan target indicates a target IP piece, from which scan data (Scan Data) is to be collected, among IP pieces included in an integrated circuit (see 10 of FIG. 1) and may include one or more IP pieces. In FIG. 2, a controller may be the same as the controller 100 of FIG. 1. In FIG. 2, a security processing module (Secure_S2D_TOP) may include the built-in scanner 200, the first processing circuit 410, the second processing circuit 420, and the second memory controller 300 of FIG. 1.

Referring to FIG. 2, software included in the integrated circuit may transmit a configuration (Configure Secure_S2D()) for security processing to the controller and a PMU. Herein, the controller may control a general operation of the integrated circuit, and the PMU may be associated with a power source for data. The configuration (Configure Secure_S2D()) for security processing may include seed information regarding address rearrangement and/or data obfuscation. The configuration (Configure Secure_S2D()) for security processing may be a scan mode signal.

When the configuration (Configure Secure_S2D()) for security processing is applied to the PMU, the PMU may generate a trigger signal (Secure_S2D_Trigger) and apply the trigger signal (Secure_S2D_Trigger) to the controller. By doing this, the controller may be aware of the occurrence of a circumstance (interrupt).

The controller may transmit an initiation signal (Secure_S2D Init) for security processing to a CMU and the PMU. The controller may apply a configuration signal (Configure Secure S2D_TOP) for security processing and a polling signal (Polling Secure S2D Cone) to the Secure S2D_TOP. The configuration signal (Configure Secure S2D_TOP) for security processing may include scan information. The security processing module (Secure S2D_TOP) may apply a scan enable signal (SCAN EN) and a scan shift signal (SCAN Shift) to a function block as the scan target and apply a memory initiation signal (Memory Init) and a signal `Write 64bits secure data to pseudo-random address in Memory' for address rearrangement to a memory. By doing this, the function block as the scan target may perform address rearrangement of scan data, and a signal (Secure_S2D_DONE) for notifying that the address rearrangement is done may be transmitted to the controller. Thereafter, the controller may transmit a system reset signal to the PMU. The initiation signal (Secure_S2D Init), the configuration signal (Configure Secure S2D_TOP), and the polling (Secure S2D Cone), may be collectively referred to as a scan control signal. Accordingly, the controller 100 may output a scan mode signal (e.g., configuration Configure Secure_S2D()) and the scan control signal (e.g., the initiation signal (Secure_S2D Init), the configuration signal (Configure Secure S2D_TOP), and/or the polling (Secure S2D Cone)) indicating a debugging data collection operation mode when a fault occurs in operations of at least some of the plurality of function blocks, and the built-in scanner 200 may collect debugging data from test logics included in the at least some function blocks based on the scan mode signal and the scan control signal and transmit the collected debugging data to an encryption circuit (e.g., the first and second processing circuits 410 and 420).

Thereafter, the software may transmit a signal `Read Secure_S2D Contents stored in Memory' for reading secure data to the memory to decrypt encrypted data stored in the memory by using the seed information, and read the decrypted data.

That is, in the memory, data of which the addresses are randomly rearranged may be stored, obfuscated data may be stored, or encrypted data to which both schemes (e.g., random rearrangement of addresses and data obfuscation) are applied may be stored. To restore and analyze the stored data, it is needed to clearly determine the configuration (Configure Secure_S2D()) for security processing and a design form of internal hardware. Therefore, security may be improved.

FIG. 3 is a block diagram illustrating the first processing circuit 410 according to an example embodiment.

According to an example embodiment, the first processing circuit 410 may include a scan data concatenator 411, a scan data obfuscation logic 412, a linear feedback shift register (LFSR) 413, and a first multiplexer 414. According to an example embodiment, the first processing circuit 410 may be a lossless obfuscation circuit configured to store scan data in a memory (e.g., DRAM).

According to an example embodiment, the scan data concatenator 411 may receive scan data (Scan Data). The scan data (Scan Data) input to the scan data concatenator 411 may be normal data. The scan data (Scan Data) may be data scanned by the built-in scanner 200.

The LFSR 413 may receive a first seed Seed_1. According to an example embodiment, the first seed Seed_1 may include information about a time point at which the scan data (Scan Data) is input. According to an example embodiment, the first seed Seed_1 may be a value which software at the top layer of an integrated circuit may set.

The scan data obfuscation logic 412 may obfuscate scan data (Scan Data) by using the scan data (Scan Data) transmitted from the scan data concatenator 411 and the first seed Seed_1 transmitted from the LFSR 413. According to an example embodiment, the scan data obfuscation logic 412 may obfuscate the scan data (Scan Data) by applying a pattern to the scan data (Scan Data) according to a characteristic of the first seed Seed_1. Data obfuscation processing may obfuscate input data according to a particular pattern, and application of the particular pattern may vary according to a characteristic of an input seed. According to an example embodiment, the data obfuscation may be at least one of layout obfuscation, data obfuscation, control obfuscation, and preventive obfuscation. However, a data obfuscation method in the scan data obfuscation logic 412 may not be limited thereto.

According to an example embodiment, the scan data obfuscation logic 412 may encrypt the scan data (Scan Data) by using a key generated by a PUF or a key assigned by software or protect data by using an obfuscation scheme, such as scrambling, using a seed set by a user. Modified data may not be analyzed without an encryption key or a scheme and background information used for obfuscation.

The first multiplexer 414 may be enabled in response to a data obfuscation signal (Data_protection_en). The first multiplexer 414 may output either the scan data (Scan Data) or obfuscated data output from the scan data obfuscation logic 412.

FIG. 4 is a block diagram illustrating the second processing circuit 420 according to an example embodiment.

According to an example embodiment, the second processing circuit 420 may include an address counter 421, a pseudo-random address generator 422, an LFSR 423, and a second multiplexer 424. The second processing circuit 420 may reset, by a user's settings, an address before the address is stored in a memory (e.g., DRAM).

According to an example embodiment, the address counter 421 may receive address information included in scan data. The address information input to the address counter 421 may be normal data. According to an example embodiment, the address information input to the address counter 421 may be a base address.

The LFSR 423 may receive a second seed Seed_2. According to an example embodiment, the second seed Seed_2 may include information about a time point at which the address information is input. According to an example embodiment, the second seed Seed_2 may be a value which software at the top layer of an integrated circuit may set.

The pseudo-random address generator 422 may rearrange an address by using the address information transmitted from the address counter 421 and the second seed Seed_2 transmitted from the LFSR 423. According to an example embodiment, the address rearrangement may be performed using a pseudo-random scheme. According to an example embodiment, an address rearrangement method in the pseudo-random address generator 422 may not be limited to that disclosed in this example embodiment. According to some example embodiments of the disclosure, when a memory address region in which scan data is to be stored is generated, instead of generating the memory address region by using a generally used base address and incremental offset, an address may be rearranged by using the base address and a pseudo-random offset, and then the scan data may be stored according to the rearranged address. Data may be extracted by reading the data from a memory in order, and only a user who knows an address generation scheme and seed information may restore the extracted data and use the restored data in debugging.

The second multiplexer 424 may be enabled in response to an address rearrangement signal Address_protection_en. The second multiplexer 424 may output either a normal address or rearranged address data output from the pseudo-random address generator 422.

The examples shown in FIGS. 3 and 4 are simple illustrations, and other various schemes for data obfuscation or address rearrangement may be used.

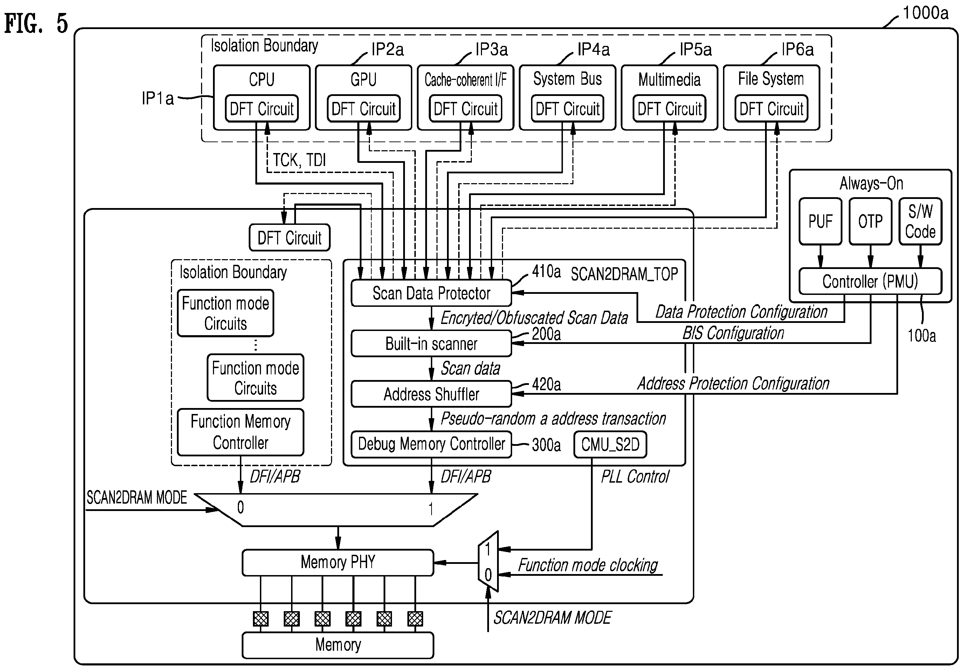

FIG. 5 is a block diagram illustrating an electronic system 1000a according to an example embodiment. A description made with reference to FIG. 1 is not repeated in a description of FIG. 5.

Referring to the electronic system 1000a of FG. 5, compared to the electronic system 1000 of FIG. 1, arrangement positions of a built-in scanner 200a and a first processing circuit 410a may be changed.

According to this example embodiment, the first processing circuit 410a may be connected to an input end of the built-in scanner 200a, and a second processing circuit 420a may be connected to an output end of the built-in scanner 200a. The first processing circuit 410a may obfuscate debugging data transmitted from a DFT circuit and transmit the obfuscated data to the built-in scanner 200a. The built-in scanner 200a of FIG. 5 may receive originally obfuscated data (e.g., secure data).

Date output from the built-in scanner 200a may be obfuscated data. The second processing circuit 420a may rearrange an address of the obfuscated data.

A second memory controller 300a may receive encrypted data in which the address of the obfuscated data is rearranged and transmit the encrypted data to a memory.

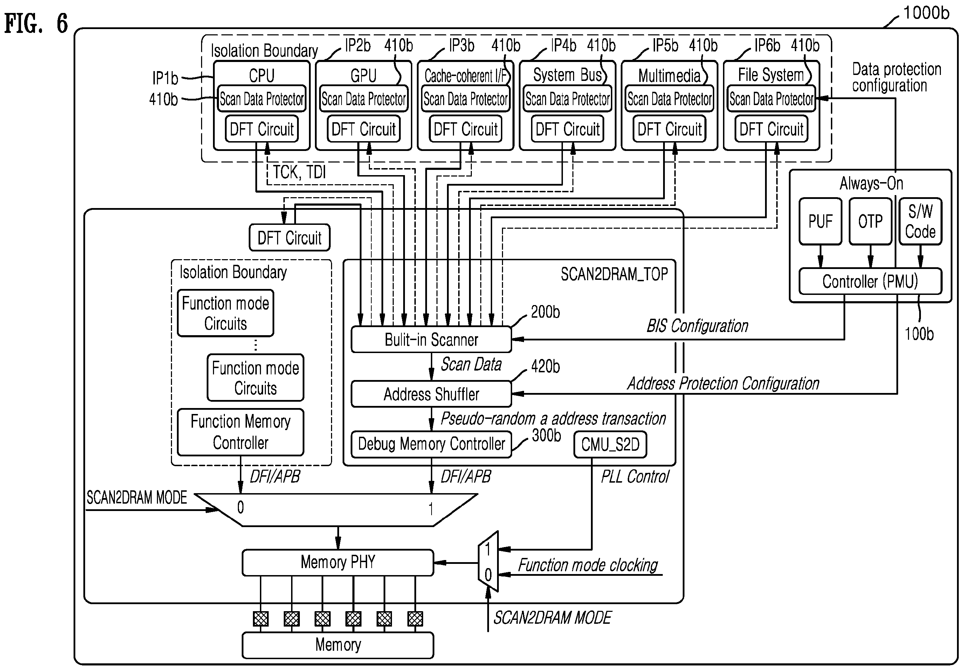

FIG. 6 is a block diagram illustrating an electronic system 1000b according to an example embodiment. A description made with reference to FIG. 1 is not repeated in a description of FIG. 6.

Referring to the electronic system 1000b of FG. 6, compared to the electronic system 1000 of FIG. 1, an arrangement position of a first processing circuit 410b may be changed.

Referring to FIG. 6, the first processing circuit 410b may be included in each of first to sixth IP pieces IP1b to IP6b and obfuscate data.

Referring to FIG. 6, because each of the first to sixth IP pieces IP1b to IP6b includes the first processing circuit 410b, an output of each of the first to sixth IP pieces IP1b to IP6b may be obfuscated data.

The obfuscated data may be directly transmitted to a built-in scanner 200b, and the built-in scanner 200b may transmit the obfuscated data to a second processing circuit 420b.

Referring to FIG. 6, because each of the first to sixth IP pieces IP1b to IP6b includes the first processing circuit 410b, the data protection information Data Protection Configuration may be applied to the first processing circuit 410b included in each of the first to sixth IP pieces IP1b to IP6b. Although FIG. 6 shows for convenience of description that the data protection information Data Protection Configuration is applied to the sixth IP piece IP6b only, it is clear that the data protection information Data Protection Configuration may also be applied to the first processing circuit 410b included in each of the first to fifth IP pieces IP1b to IP5b.

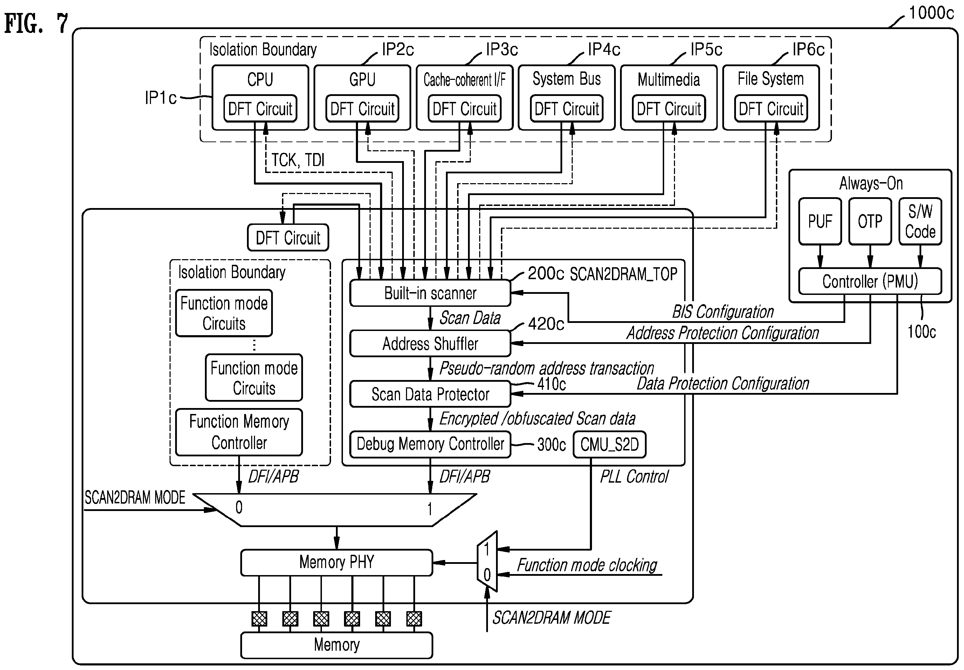

FIG. 7 is a block diagram illustrating an electronic system 1000c according to an example embodiment. A description made with reference to FIG. 1 is not repeated in a description of FIG. 7.

Referring to the electronic system 1000c of FG. 7, compared to the electronic system 1000 of FIG. 1, arrangement positions of a first processing circuit 410c and a second processing circuit 420c may be changed.

According to this example embodiment, scan data (Scan Data) output from a built-in scanner 200c may be transmitted to the second processing circuit 420c. The second processing circuit 420c may rearrange an address of the scan data (Scan Data), encrypt the address-rearranged scan data, and transmit the encrypted data to the first processing circuit 410c. The first processing circuit 410c may obfuscate the data to which the rearranged address is applied. The data obtained by obfuscating the address-rearranged data may be transmitted to a second memory controller 300c.

Referring to the example embodiments of FIGS. 5 to 7, arrangement positions of a first processing circuit and a second processing circuit included in an encryption unit may vary in the memory interface MIF, and in some example embodiments, the first processing circuit may be included in a function block. That is, the first processing circuit and the second processing circuit may be independent from each other, and a processing order of the first processing circuit and the second processing circuit may be optional. According to an example embodiment, the first processing circuit may be arranged at any position in an integrated circuit.

In addition, although it has been described in the above example embodiments that encrypted data is generated by adopting both the first processing circuit and the second processing circuit, encrypted data may be generated by adopting only one of the first processing circuit and the second processing circuit.

According to the above example embodiments of the disclosure, in an integrated circuit involving a scan data function, security of the integrated circuit may be reinforced through obfuscation of stored scan data.

The scan data may include an internal design and secure data, and thus, when the scan data is recorded in a storage medium, an obfuscation scheme enabling only an authorized user to access or analyze the scan data may be added to a corresponding system, thereby reinforcing security of an integrated circuit and software configured to operate the integrated circuit.

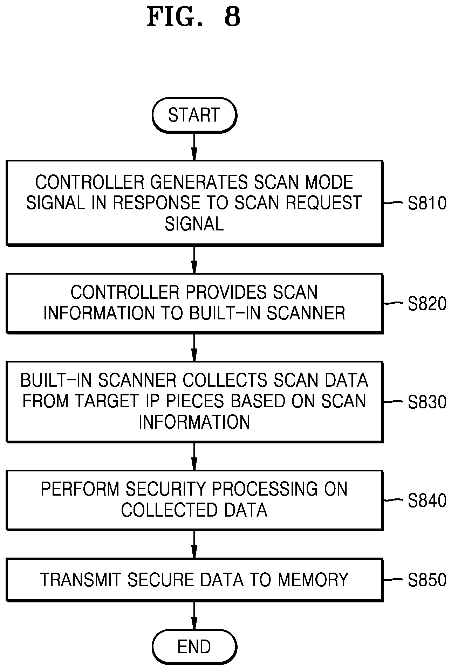

FIG. 8 is a flowchart illustrating a data processing method of an integrated circuit, according to an example embodiment.

In operation S810, a controller may generate a scan mode signal in response to a scan request signal. In operation S820, the controller may provide scan information to a built-in scanner. In operation S830, the built-in scanner may collect scan data from target IP pieces based on the scan information.

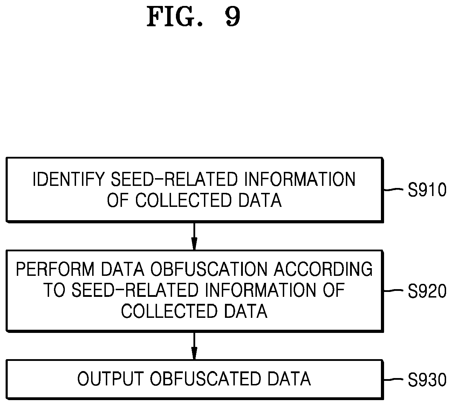

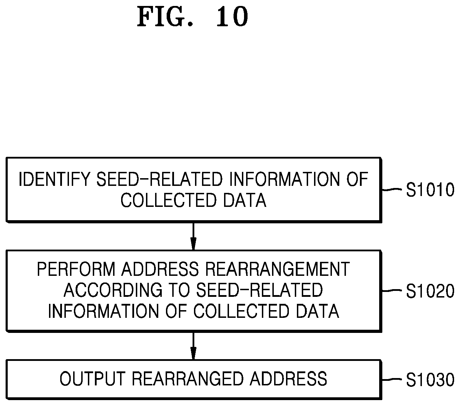

In operation S840, security processing on the collected data may be performed. Particular security processing may be performed by the first processing circuit 410 or the second processing circuit 420 of FIG. 1. A particular method of operation S840 is described below with reference to FIGS. 9 and 10.

In operation S850, the secure data may be transmitted to a memory. Therefore, data encrypted by at least one of a first processing circuit and a second processing circuit may be stored in the memory. Because the encrypted data stored in the memory may not be restored without seed information and an obfuscation pattern or an address rearrangement pattern applied when the encrypted data was generated, data processing with high security may be performed.

FIG. 9 is a flowchart illustrating a data processing method using a first processing circuit, according to an example embodiment.

Referring to FIG. 9, in operation S910, seed-related information of collected data may be identified. In operation S920, data obfuscation may be performed according to the seed-related information of the collected data. In operation S930, obfuscated data may be output. Operations S910 to S930 may be performed by the first processing circuit 410 of FIG. 3.

FIG. 10 is a flowchart illustrating a data processing method using a second processing circuit, according to an example embodiment.

In operation S1010, seed-related information of collected data may be identified. In operation S1020, address rearrangement may be performed according to the seed-related information of the collected data. In operation S 1030, a rearranged address may be output.

Operations S1010 to S1030 may be performed by the second processing circuit 420 of FIG. 4.

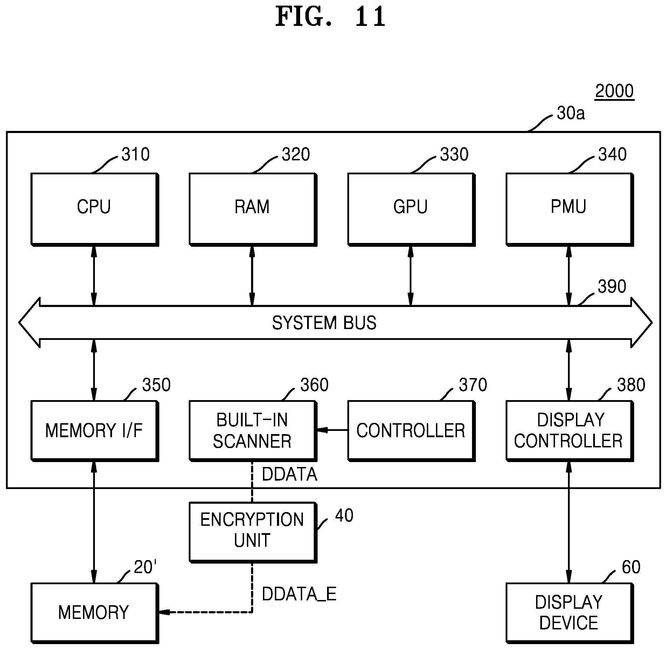

FIG. 11 is a block diagram schematically illustrating an electronic device 2000 according to an example embodiment.

The electronic device 2000 may include an integrated circuit 30a, a memory 20', an encryption unit 40, and a display device 60. The electronic device 2000 may further include various components. For example, when the electronic device 2000 is a portable terminal, the electronic device 2000 may further include a lens, an image sensor, an antenna, a transceiver, a modem, a microphone, a speaker, a touch input interface, various types of sensors, and the like.

The integrated circuit 30a may include a CPU 310, RAM 320, a GPU 330, a PMU 340, a memory interface 350, a display controller 380, a built-in scanner 360, a controller 370, and a system bus 390. The CPU 310, RAM 320, GPU 330, and PMU 340 may be examples of IP pieces. The integrated circuit 30a may further include various IP pieces.

The CPU 310 may generally control operations of the integrated circuit 30a and the electronic device 2000. The CPU 310 may control an operation of each of the CPU 310, the RAM 320, the GPU 330, the PMU 340, the memory interface 350, the built-in scanner 360, the controller 370, and the display controller 380 in the integrated circuit 30a. In an example embodiment, the CPU 310 may be implemented by a multi-core. The multi-core is one computing component having two or more independent cores.

The RAM 320 may temporarily store programs, data, or instructions. For example, the programs and/or data stored in the memory 20' may be temporarily stored in the RAM 320 according to control or booting code of the CPU 310. The RAM 320 may be implemented by DRAM or SRAM.

The GPU 330 may perform operations related to graphics processing.

The PMU 340 may manage power of each of the CPU 310, the RAM 320, the GPU 330, the PMU 340, the memory interface 350, the built-in scanner 360, the controller 370, and the display controller 380 in the integrated circuit 30a. In addition, the PMU 340 may determine an operating status of each of the CPU 310, the RAM 320, the GPU 330, the PMU 340, the memory interface 350, the built-in scanner 360, the controller 370, and the display controller 380 and control an operation thereof.

The memory interface 350 may generally control an operation of the memory 20' and control data exchange between each component in the integrated circuit 30a and the memory 20'. The memory interface 350 may write or read data on or from the memory 20' in response to a request from the CPU 310.

When a fault occurs in an operation of the integrated circuit 30a, the controller 370 may collect and store debugging data DDATA and control a general operation to be performed to reboot the integrated circuit 30a.

The display controller 380 may control an operation of the display device 60 and transmit image data to the display device 60. For example, the display controller 380 may change a format of image data provided from the GPU 330 or perform image processing on the image data and transmit the image data to the display device 60.

The CPU 310, the RAM 320, the GPU 330, the PMU 340, the memory interface 350, the built-in scanner 360, the controller 370, and the display controller 380 in the integrated circuit 30a may transmit and receive data to and from each other therein via the system bus 390.

The built-in scanner 360 may collect debugging data DDATA from the CPU 310, the RAM 320, the GPU 330, the PMU 340, the memory interface 350, the display controller 380, and the system bus 390 in the integrated circuit 30a and transmit the collected debugging data DDATA to the encryption unit 40. As described above with reference to FIG. 1, the debugging data DDATA may be scan data.

The encryption unit 40 may encrypt the debugging data DDATA and output encrypted data DDATA_E. The output encrypted data DDATA_E may be stored in the memory 20'.

The memory 20' is a storage configured to store data and may store an OS, various kinds of programs, and various kinds of data. The memory 20' may be outside the integrated circuit 30a.

The display device 60 may display received image data. The display device 60 may be implemented by a flat or flexible display, such as a liquid crystal display (LCD), a light-emitting diode (LED) display, or an organic LED (OLED) display.

Referring to FIG. 11, the electronic device 2000 may store the encrypted data DDATA_E in the memory 20' outside the integrated circuit 30a. For example, the memory 20' may include DRAM. However, the memory 20' is not limited thereto and may include a nonvolatile memory device (flash memory, PRAM, MRAM, ReRAM, or FRAM). In some example embodiments, the memory 20' may include at least one of a memory card, a solid state drive (SSD), a USB memory, and a hard disk drive (HDD). According to an example embodiment, the memory 20' may be a storage interface, such as a UFS.

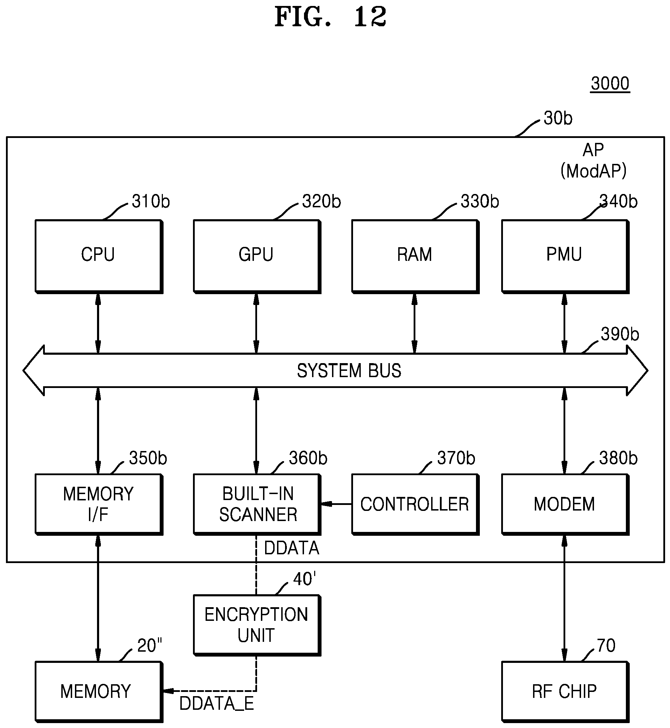

FIG. 12 is a block diagram schematically illustrating an AP 30b and an electronic device 3000 including the same, according to an example embodiment. Referring to FIG. 12, the electronic device 3000 may include the AP 30b, a memory 20", an encryption unit 40', and a radio frequency (RF) chip 70. The electronic device 3000 may further include various components.

The AP 30b may be implemented by an SoC and may include a CPU 310b, RAM 330b, a GPU 320b, a PMU 340b, a memory interface 350b, a modem 380b, a built-in scanner 360b, a controller 370b, and a system bus 390b. The CPU 310b, RAM 320b, GPU 330b, and PMU 340b may be examples of IP pieces. The AP 30b may further include various IP pieces. The AP 30b may be referred to as a ModAP because a function of a modem chip is integrated therein.

The modem 380b may modulate data to be transmitted, such that the data to be transmitted is suitable for a radio environment, and demodulate received data, for wireless communication. The modem 380b may perform digital communication with the RF chip 70 outside the AP 30b.

The RF chip 70 may convert a high-frequency signal received through an antenna into a low-frequency signal and transmit the low-frequency signal to the modem 380b. In addition, the RF chip 70 may convert a low-frequency signal received from the modem 380b into a high-frequency signal and transmit the high-frequency signal to the outside of the electronic device 3000 through the antenna. In addition, the RF chip 70 may amplify or filter a signal.

The built-in scanner 360b included in the AP 30b may collect debugging data DDATA from the CPU 3 10b, the GPU 320b, the RAM 330b, the PMU 340b, the memory interface 350b, the modem 380b, and the system bus 390b in the AP 30b in the scan mode and transmit the debugging data DDATA to the encryption unit 40'. The encryption unit 40' may generate encrypted data DDATA_E by encrypting the debugging data DDATA and store the encrypted data DDATA_E in a memory inside or outside the AP 30b. For example, the encrypted data DDATA_E output from the encryption unit 40' may be stored in the memory 20" outside the AP 30b or stored in the RAM 330b or a register file including flip-flops inside the AP 30b. The encryption unit 40' may include a first processing circuit configured to obfuscate the debugging data DDATA and a second processing circuit configured to rearrange an address of the debugging data DDATA. According to an example embodiment, the first processing circuit and the second processing circuit may be connected to an output end of the built-in scanner 360b. According to another example embodiment, the first processing circuit and the second processing circuit included in the encryption unit 40' may be separately arranged in different regions. According to an example embodiment, the first processing circuit may be connected to an input end of the built-in scanner 360b, and the second processing circuit may be connected to the output end of the built-in scanner 360b. According to another example embodiment, the first processing circuit may be inside the CPU 310b, the GPU 320b, the RAM 330b, the PMU 340b, the memory interface 350b, the controller 370b, the modem 380b, and the system bus 390b in the AP 30b, and the second processing circuit may be connected to the output end of the built-in scanner 360b. According to another example embodiment, the second processing circuit may be connected to the output end of the built-in scanner 360b, and the first processing circuit may be connected to an output end of the second processing circuit.

The modem 380b may be designed to be suitable for a radio environment (e.g., a wireless communication scheme) of a region in which the electronic device 3000 is used. If the region in which the electronic device 3000 is used is far from a region in which a debugging environment of the AP 30b (e.g., the ModAP) including the modem 380b is provided, it may not be easy to debug the AP 30b. However, in the electronic device 3000 according to an example embodiment, the AP 30b may collect debugging data DDATA without intervention by an external debugger and store the collected debugging data DDATA, and the collected debugging data DDATA may be encrypted to encrypted data DDATA_E by the encryption unit 40' and stored.

Any functional blocks shown in the figures and described above may be implemented in processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

While the disclosure has been particularly shown and described with reference to some example embodiments thereof, it will be understood that various changes in form and details may be made therein without departing from the scope of the following claims. Embodiments are set out in the following clauses:
Clause 1 An integrated circuit comprising:
   intellectual property (IP) pieces comprising test logics, respectively;
   a scanner configured to collect debugging data from the test logics of the IP pieces; and
   an encryption circuit configured to convert the debugging data into encrypted data.
Clause 2 The integrated circuit of clause 1, wherein the encryption circuit comprises a first processing circuit configured to obfuscate the debugging data.
Clause 3 The integrated circuit of clause 2, wherein the first processing circuit is further configured to apply an obfuscation pattern of the debugging data based on a first seed.
Clause 4 The integrated circuit of clause 1, wherein the encryption circuit comprises a second processing circuit configured to rearrange an address of the debugging data.
Clause 5 The integrated circuit of clause 4, wherein the second processing circuit is further configured to apply an address rearrangement pattern of the debugging data based on a second seed.
Clause 6 The integrated circuit of any one of clauses 1 to 5, wherein the encryption circuit is connected to an output end of the scanner.
Clause 7 The integrated circuit of clause 2, wherein the first processing circuit is included in each of the IP pieces.
Clause 8 The integrated circuit of clause 4, wherein the second processing circuit is connected to an output end of the scanner.
Clause 9 The integrated circuit of any one of clauses 1 to 8, wherein the scanner is configured to form a scan chain by connecting a plurality of scan flip-flops, and the debugging data includes scan data output from the scan chain.
Clause 10 An application processor mounted in an electronic device comprising a memory, the application processor comprising:
   a plurality of function blocks each comprising a test logic;
   a controller configured to output a scan mode signal and a scan control signal indicating a debugging data collection operation mode when a fault occurs in operations of at least some of the plurality of function blocks;
   a built-in scanner configured to collect debugging data from test logics included in the at least some of the plurality of function blocks based on the scan mode signal and the scan control signal and transmit the collected debugging data to the memory; and
   an encryption circuit configured to convert the collected debugging data into an encrypted data form.
Clause 11 The application processor of clause 10, wherein the encryption circuit comprises:
   a first processing circuit configured to obfuscate the collected debugging data; and
   a second processing circuit configured to rearrange an address of the collected debugging data.
Clause 12 The application processor of clause 11, wherein the first processing circuit and the second processing circuit are connected to an output end of the built-in scanner.
Clause 13 The application processor of clause 11, wherein the first processing circuit is connected to an input end of the built-in scanner, and the second processing circuit is connected to an output end of the built-in scanner.
Clause 14 The application processor of clause 11, wherein the first processing circuit is inside each of the plurality of function blocks, and the second processing circuit is connected to an output end of the built-in scanner.
Clause 15 The application processor of clause 12, wherein the second processing circuit is connected to the output end of the built-in scanner, and the first processing circuit is connected to an output end of the second processing circuit.

## Claims

1. An integrated circuit comprising:
intellectual property (IP) pieces comprising test logics, respectively;
a scanner configured to collect debugging data from the test logics of the IP pieces; and
an encryption circuit configured to convert the debugging data into encrypted data.

2. The integrated circuit of claim 1, wherein the encryption circuit comprises a first processing circuit configured to obfuscate the debugging data.

3. The integrated circuit of claim 2, wherein the first processing circuit is further configured to apply an obfuscation pattern of the debugging data based on a first seed.

4. The integrated circuit of claim 1, wherein the encryption circuit comprises a second processing circuit configured to rearrange an address of the debugging data.

5. The integrated circuit of claim 4, wherein the second processing circuit is further configured to apply an address rearrangement pattern of the debugging data based on a second seed.

6. The integrated circuit of any one of claims 1 to 5, wherein the encryption circuit is connected to an output end of the scanner.

7. The integrated circuit of claim 2, wherein the first processing circuit is included in each of the IP pieces.

8. The integrated circuit of claim 4, wherein the second processing circuit is connected to an output end of the scanner.

9. The integrated circuit of any one of claims 1 to 8, wherein the scanner is configured to form a scan chain by connecting a plurality of scan flip-flops, and the debugging data includes scan data output from the scan chain.

10. An application processor mounted in an electronic device comprising a memory, the application processor comprising:
the integrated circuit of claim 1, wherein the scanner is a built-in scanner configured to collect debugging data from the test logics of the IP pieces based on the scan mode signal and the scan control signal and transmit the collected debugging data to the memory; and
a controller configured to output a scan mode signal and a scan control signal indicating a debugging data collection operation mode when a fault occurs in operation of at least one of the IP pieces.

11. The application processor of claim 10, wherein the encryption circuit comprises:
a first processing circuit configured to obfuscate the collected debugging data; and
a second processing circuit configured to rearrange an address of the collected debugging data.

12. The application processor of claim 11, wherein the first processing circuit and the second processing circuit are connected to an output end of the built-in scanner.

13. The application processor of claim 11, wherein the first processing circuit is connected to an input end of the built-in scanner, and the second processing circuit is connected to an output end of the built-in scanner.

14. The application processor of claim 11, wherein the first processing circuit is inside each of the plurality of function blocks, and the second processing circuit is connected to an output end of the built-in scanner.

15. The application processor of claim 12, wherein the second processing circuit is connected to the output end of the built-in scanner, and the first processing circuit is connected to an output end of the second processing circuit.
